# EUROPEAN PATENT APPLICATION

(11) **EP 0 578 306 A1**
(43) Date of publication of application: **12.01.1994**
(21) Application number: 93201905.2
(22) Date of filing: 30.06.1993
(51) Int. Cl.: H02G 3/18

(54) **Mounting framework**

(30) Priority: 06.07.1992 NL 9201206
(71) Applicant: VAN GEEL SYSTEMS B.V., NL-5281 RS Boxtel (NL)
(72) Inventor: Van Geel, Jacobus Antonius Peter, NL-5281 JT Boxtel (NL)
(74) Representative: Hoorweg, Petrus Nicolaas

(57) **Abstract**

A mounting framework suitable for mounting electrical fitting material, such as socket outlets, in raised floors, which framework is constructed from at least one rectangular upper and lower frame which are held at a distance above each other by means of spacer elements, wherein the spacer elements are provided on the corners of the frame with one or more mounting means for fixing the recessed fittings along the sides of the frame such that the user side thereof faces towards the middle of the framework.

## Description

The invention relates to a mounting framework suitable for mounting electrical fitting material, such as socket outlets, in raised floors, which framework is constructed from at least one rectangular upper and lower frame which are held at a distance above each other by means of spacer elements.

Such a framework serves for arranging of fitting material, for instance socket outlets, under a raised floor, under which floor run the voltage leads. The user can connect the cables for the appliances in the space above the floor via the top opening of the mounting framework, which can be closed off by means of a cover provided with a suitable floor covering. In the known mounting frameworks the mounting of the recessed fittings is quite complicated and has to be finished in situ. Furthermore, the fitting material is normally arranged inside the framework, whereby the space available is either not large enough for accommodating long plugs on the cables for the appliances or a considerable floor height is required.

The invention has for its object to obviate the above stated drawbacks and provides for this purpose a mounting framework which is distinguished according to the invention in that the spacer elements are provided with one or more mounting means for fixing the recessed fittings such that the user side thereof faces towards the middle of the framework.

Because the fitting material is tilted as it were through 90° and the user side faces towards the middle of the framework the whole central space of the framework is practically free for the user to arrange cables and the like. Since the framework is rectangular, four sides of the framework can be used for the fitting material, which considerably increases the degree of utilization of such a mounting framework.

According to a further development of the framework according to the invention the spacer elements are arranged in the corners of the framework, wherein the fitting material is fixed in each case between two corner spacer elements.

An exceptionally simple fixing is obtained by embodying the mounting means on the spacer element as a hole through which a protrusion arranged on the fitting material can be placed. This lessens mounting time and enables building in pre-wired fitting boxes, which pre-wiring can then be connected easily to the voltage leads arranged in the floor.

In a preferred embodiment at least one of the corner spacer elements is embodied with a locking means.

Above mentioned and other features of the invention will follow from the figure description hereinbelow of an embodiment. In the drawing:
fig. 1 shows a perspective top view of a raised floor having arranged therein a framework for mounting fitting material according to the invention,
fig. 2 is a perspective view along arrow 2 in fig. 1 of a corner spacer element according to the invention,
fig. 3 shows on enlarged scale a detail of a part of the corner spacer element of fig. 2.

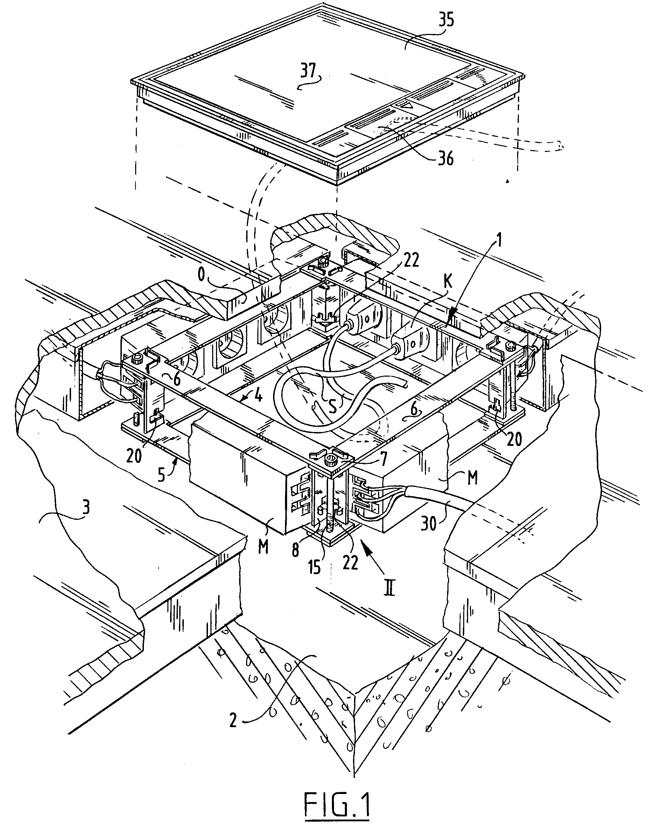

The mounting framework 1 in fig. 1 is suitable for mounting under a raised floor. The floor consists of a supporting part 2 of random type, at a distance from which is arranged a finished floor 3. The construction of the finished floor otherwise falls outside the scope of the invention and is assumed known.

The mounting framework consists of an upper frame 4 and a lower frame 5 which here have an identical form and are of the same dimensions. Each frame is constructed from strips 6 which are mutually fastened in the corners at 7. Thus created is a right-angled, for instance square, mounting framework, the height of which is determined by spacer elements 8. In the embodiment shown these spacer elements are arranged in the corners of the frames at 7, the specific form being further elucidated hereinbelow.

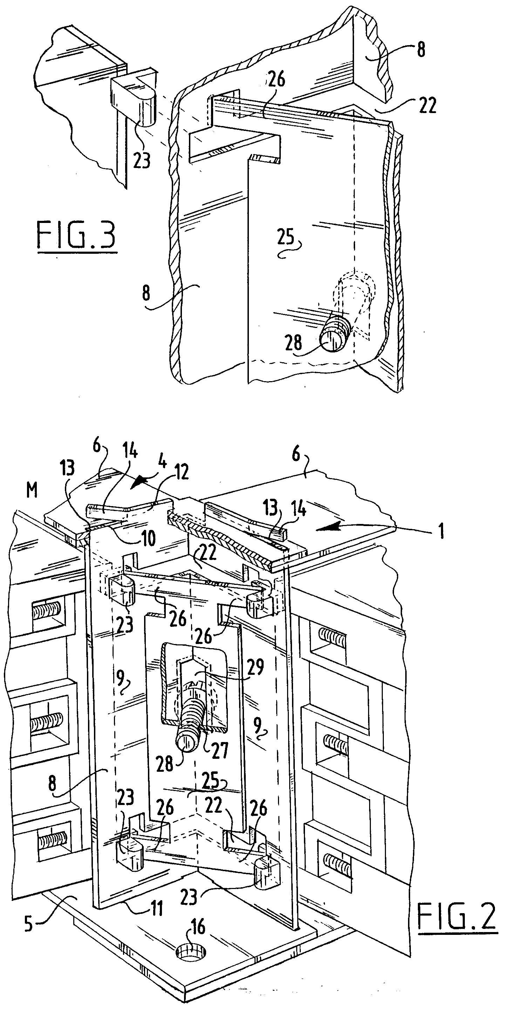

Each spacer element 8 is constructed in the shown embodiment from two flanges 9 standing at an angle of 90°, see fig. 2, which spacer element is provided with a top edge 10 and a bottom edge 11. These top and bottom edges rest respectively against the underside of upper frame 4 and the top surface of lower frame 5. The distance between these two edges 10 and 11 determines the distance between the upper and lower frame 4 and 5. Each spacer element is moreover elongated with a lip 12 which can be placed through an opening 13 in the strips 6 lying one over the other of the frames 4 and 5. By bending a finger 14 forming part of the lip 12 the frames are mutually connected via the spacer element 8. If desired an additional bolt 15 can be placed through the registered holes 16 in the upper and lower frames, which bolt co-acts with a non-visible nut situated on the underside of the framework.

According to the invention the spacer element 8 is also provided with mounting means, here in the form of holes 20 and slotted holes 22. The respective holes 20, 22 lie at a distance from the upper and lower frames respectively and serve to receive a protrusion 23 which is formed integrally with the fitting material M and has a length and width corresponding with the standing opening formed by upper respectively lower strip 6 and two spacer elements 8. The fitting material, here in the form of a socket outlet, is placed such that the user side faces toward the middle of framework 1.

The protrusions 23 of the fitting material are placed into the openings 20 and 22 and subsequently fixed in a manner to be further elucidated hereinafter.

It is noted that opening 20 in the right and left-hand spacer element in fig. 1 is a rectangular hole in which the protrusion 23 fits entirely. It is remarked that the openings 22 in the front and rear spacer element 8 in fig. 1 is a slot-like hole which extends over both wings 9 of the spacer element.

This spacer element is provided with a lock 25, here in the form of a slidable plate which is provided at the top and bottom with latches 26. Plate 25 is further embodied with a threaded hole 27 into which a screw 28 can be fastened. The head of screw 28 comes to lie against the corner part of spacer element 8 and is carried through a slot-like opening 29 in the spacer element.

When the screw is not tightened, so that plate 25 is not clamped fixedly in the interior corner of spacer element 8, the locking plate 25 can be moved in up and downward sense, wherein the screw 28 slides up and down in slotted hole 29. Assuming that plate 25 occupies the position of fig. 3, the latch 26 will lie above the slot-like opening 22 and the protrusion 23 can be moved from the corner of spacer element 8 into the slot-like opening 22 until it comes up against the left-hand wall, see fig. 2. The protrusions 23 on the other side of the fitting material M are placed beforehand in the rectangular openings 20 of the other spacer element 8 so that once the protrusions 23 are placed the fitting material M is supported at four points between the spacer elements 8. A return movement can be prevented by sliding the plate 25 downward whereby the latch 26 comes to lie against the rear side of protrusions 23 and prevents sliding back. By tightening the screw 28 the plate 25 is fixed, and with it the fitting material M.

It will be apparent from the above that mounting of fitting material in the proposed mounting framework according to the invention can take place in extremely simple manner. Replacement of fitting material is also easily carried out, merely by loosening a screw, sliding upward the locking plate 25 and removing the fitting material M from the mounting framework. The fitting material can be prewired, wherein the connections 30 for placing of fitting material M can be effected in the framework.

Because the user side of the fitting material M faces toward the centre of the mounting framework sufficient space is available for accommodating excess cables S and long plugs K can also be employed which extend parallel to the finished floor. It will be further apparent that the four sides of the mounting framework can be used, whereby many connection options are present without the framework having to become excessively large, as is the case with the typical mounting frameworks. The opening O in finished floor 3 can be closed off in the usual manner with a cover flat 35 which can be provided on the top side with cable feeds 36 and which can be covered on the remaining surface area with material similar to the floor covering 37.

The invention is not limited to the above described embodiment. The fitting openings 20 and 22 do not for instance have to have a differing form but each spacer element 8 can be provided with the same locking plate 25.

## Claims

1. Mounting framework suitable for mounting electrical fitting material, such as socket outlets, in raised floors, which framework is constructed from at least one rectangular upper and lower frame which are held at a distance above each other by means of spacer elements, **characterized in that** the spacer elements are provided with one or more mounting means for fixing the recessed fittings such that the user side thereof faces towards the middle of the framework.

2. Mounting framework as claimed in claim 1, **characterized in that** the spacer elements are arranged in the corners of the upper and lower frames, wherein the fitting material extends in each case between two corner spacer elements and is fixed thereto.

3. Mounting framework as claimed in claims 1 and 2, **characterized in that** the mounting means in the spacer element is formed by a through-opening for receiving a protrusion connected to the fitting material.

4. Mounting framework as claimed in any of the foregoing claims, **characterized in that** at least one of the spacer elements is embodied with a locking means.

5. Mounting framework as claimed in claim 4, **characterized in that** the spacer element is embodied with two mutually perpendicular flanges and the locking means is a locking plate slidable up and downward in the interior corner of that spacer element.
